# EUROPEAN PATENT APPLICATION

(11) **EP 2 963 104 A1**
(43) Date of publication of application: **06.01.2016**
(21) Application number: 14756464.5
(22) Date of filing: 28.02.2014
(51) Int. Cl.: C12G 1/02, C12G 3/02

(54) **FLAVOURSOME FERMENTED ALCOHOLIC BEVERAGE CHARACTERIZED BY MUSCAT-LIKE FLAVOUR, AND PRODUCTION METHOD THEREFOR**

(30) Priority: 01.03.2013 JP 2013040987
(71) Applicant: MERCIAN CORPORATION, Tokyo 164-0001 (JP)
(72) Inventor: OKOSHI Takashi, Tokyo 164-0001 (JP); TANZAWA Fumiko, Tokyo 164-0001 (JP); SUZUKI Katsuhiko, Tokyo 164-0001 (JP)
(74) Representative: Zimmermann & Partner Patentanwälte mbB
(86) International application number: PCT/JP2014/055100
(87) International publication number: WO 2014/133140

(57) **Abstract**

A method is disclosed for manufacturing fruit liquor in which muscat fragrance is emphasized. The method includes either or both of set of step (a) and step (d) and another set of step (b) and step (c). Step (a) is to obtain fruit juice or fruit juice containing pericarp, by crushing and squeezing the fruit part of grapes. Step (b) is to heat the fruit juice or the fruit juice containing pericarp obtained in step (a) so as to make the article temperature reach 45 to 95 °C. Step (c) is to add enzyme having the glycosidase activity at the article temperature of fruit juice in a range of 10 to 55 °C. Step (d) is to ferment the fruit juice obtained in step (b) or step (c) using a yeast having the β-glucosidase activity. The fruit liquor manufactured by this method has favorable muscat fragrance.

## Description

### CROSS-REFERENCE TO RELATED APPLICATION

The present application claims priority based on Japanese Patent Application No. 2013-40987 (filing date: March 1, 2013) which is a prior application applied to Japan. The entire contents of the prior application are incorporated by reference herein.

### BACKGROUND OF THE INVENTION

### Field of the Invention

The present invention relates to a fermented alcoholic beverage having muscat-like rich fragrance and a method for manufacturing the same.

### Background Art

Monoterpene alcohol is utilized as a food perfume component. In the field of fermented alcoholic beverage, monoterpene alcohol is known to be an important fragrance component for characterizing muscat wine.

As a trial for manufacturing fermented alcoholic beverage having muscat-like favorable fragrance, Japanese Patent Application Laid-Open Publication No. 2002-238572 (Patent Document 1) describes a method of manufacturing sake using a yeast mutant producing monoterpene alcohol.

In addition, as a trial for lasting smell and taste filled with fresh feeling in fruit liquor, Japanese Patent Application Laid-Open Publication No. 2010-158207 (Patent Document 2) describes a method of filling fruit liquor with carbon dioxide gas by a predetermined quantity.

However, there are no reports of manufacturing fermented alcoholic beverage, in which the muscat-like fragrance is enhanced, without the utilization of the yeast mutant for the fermentation.

### PRIOR ART DOCUMENT

### Patent document

Patent Document 1: Japanese Patent Application Laid-Open Publication No. 2002-238572
Patent Document 2: Japanese Patent Application Laid-Open Publication No. 2010-158207

### SUMMARY OF THE INVENTION

### Problems to be solved by the Invention

An object of the present invention is to provide a method for manufacturing fruit liquor having favorable muscat fragrance, and to provide fermented alcoholic beverage having rich muscat fragrance.

### Means for solving the problem

The present inventors found, in a process of manufacturing fruit liquor, that the content of monoterpene alcohol was increased by a heat treatment or an enzyme treatment performed on fruit juice or pericarp-containing fruit juice obtained from the fruit part of grapes, under a predetermined condition before the fermentation, so as to enhance the muscat fragrance in the manufactured fruit liquor and enhance the quality of muscat fragrance. Furthermore, the present inventors found that, when the fruit liquor manufactured as described above was added to fermented alcoholic beverage, rich muscat fragrance would be provided to the fermented alcoholic beverage. The present invention is based on these findings.

The manufacturing method according to the present invention is a method for manufacturing fruit liquor in which muscat fragrance is emphasized. The method comprises following step (a), step (d), and any one or both of step (b) and step (c): (a) obtaining fruit juice or fruit juice containing pericarp by crushing and squeezing fruit part of grapes; (b) heating the fruit juice or the fruit juice containing the pericarps obtained by step (a), so as to make an article temperature reach 45 to 95 °C; (c) adding an enzyme having glycosidase activity at 10 to 55 °C of the article temperature of the fruit juice, to the fruit juice or the fruit juice containing the pericarp obtained by step (a); (d) fermenting the fruit juice obtained by step (b) or step (c) using the yeast having β-glucosidase activity.

The fermented alcoholic beverage according to the present invention is a fermented alcoholic beverage containing fruit liquor manufactured by the method according to the present invention.

According to the present invention, it is possible to provide fermented alcoholic beverage having the favorable rich muscat fragrance.

### DETAILED DESCRIPTION OF THE INVENTION

In the method for manufacturing fruit liquor according to the present invention, the step (b) of heating treatment and/or the step (c) of enzyme treatment are performed between the step (a) of crushing/squeezing process and the step (d) of fermenting process, to increase the concentration of monoterpene alcohol contained in fruit juice. As a result, it is possible to obtain fruit liquor in which the favorable muscat fragrance is significantly enhanced.

In the present specification, the term "monoterpene alcohol" means free monoterpene alcohol, unless particularly indicated in the specification. The free monoterpene alcohol is volatile, which is not bonded with glucose. Geraniol, linalool, α-terpineol, β-citronellol, nerol or the like can be given as the free monoterpene alcohol. On the other hand, the term "bonded monoterpene alcohol" means glucoside in which the free monoterpene alcohol is bonded with glucose. This bonded monoterpene alcohol is non-volatile.

In the present specification, the term "fruit liquor" means fermented alcoholic beverage obtained by the alcoholic fermentation of fruit juice liquid which utilizes at least fruit juice as a part of raw materials. Fruit juice of grapes, fruit juice of apples, fruit juice of citruses or the like can be given as the fruit juice. In the present invention, *vinum* (wine) is preferable as the fruit liquor.

The heat treatment in step (b) is performed by heating fruit juice or fruit juice containing pericarp (mixture of pericarp and fruit juice) to a predetermined temperature higher than room temperature. In the present specification, it is confirmed that a sufficient amount of bonded monoterpene alcohol is extracted from grape pericarp by this heating treatment in the case of heating to 45 to 95 °C. Thus, the article temperature of fruit juice or fruit juice containing pericarp is raised to 45 to 95 °C by this heating treatment. The heated fruit juice or the heated fruit juice containing pericarp may be held at the temperature for a predetermined time. For example, it can be held for 0 to 30 minutes. In a preferable embodiment of the present invention, the hold time is set to be 0 minute. In other words, the heating in this embodiment is performed to raise the article temperature of fruit juice or fruit juice containing pericarp to the temperature described above, and then the heating is stopped soon.

The enzyme treatment in step (c) is performed by treating the fruit juice or the fruit juice containing pericarp (mixture of pericarp and fruit juice) with an enzyme having the glycosidase activity. In the present specification, it is confirmed that the concentration of free monoterpene alcohol in the fruit juice obtained by this enzyme treatment is increased when this enzyme treatment is started at the temperature in a range 10 to 55 °C. Thus, when the article temperature of fruit juice or fruit juice containing pericarp is 10 to 55 °C, the enzyme is added in this enzyme treatment. Furthermore, in the present specification, it is confirmed that the concentration of the free monoterpene alcohol in the fruit juice obtained by this enzyme treatment is also increased when the enzyme treatment is started at a temperature in a range 10 to 50 °C. Thus, the enzyme may be added when the article temperature of fruit juice or fruit juice containing pericarp is 10 to 50 °C, in this enzyme treatment. Although an enzyme having the glycosidase activity is enough as the enzyme utilized in the enzyme treatment, it is preferable to utilize an enzyme whose safety is confirmed as a food. As such enzyme, various enzymes are known in this technical field. For example, AR2000 (DSM), Rapidase (registered trademark) Expression (DSM), Lallzyme Cuvee Blanc (registered trademark), Lallzyme Beta (registered trademark) (LALLEMAND), Rohapect (registered trademark) MAX, ROHALASE (registered trademark) BXL, ROHALASE (registered trademark) BX, ROHAVIN (registered trademark) MX, ROHAVIN (registered trademark) VR-X (AB enzym), Ultrazym EX-L (Novozymes) or the like can be given. Preferably, AR2000 is utilized. One of ordinary skill in the art can adequately select the time for the enzyme treatment, so as to adjust the concentration of the free monoterpene alcohol in the fruit juice to be within a favorable range. In an embodiment of the present invention, the enzyme is added to the fruit juice or the fruit juice containing pericarps, and then the fruit juice is kept overnight at 5 °C.

In the method for manufacturing fruit liquor according to the present invention, it is preferable to perform both of step (b) and step (c). Therefore, in a preferable embodiment according to the present invention, the manufacturing method according to the present invention includes all of step (a), strep (b), step (c) and step (d). In this embodiment, it is preferable to perform step (c) after step (b) is performed. In this case, the article temperature can be adjusted after the heat treatment in step (b) is completed, and the enzyme can be added when the article temperature becomes a predetermined temperature in a range 10 to 55 °C or a range 10 to 50 °C.

In the crushing-squeezing step of step (a), the fruit part of grapes is crushed and squeezed so as to obtain the fruit juice or the fruit juice containing pericarp (mixture of the pericarp and the fruit juice). It is preferable to obtain the fruit juice containing pericarp (mixture of the pericarp and the fruit juice). For the fruit part of grape, it is preferable to utilize a grape variety having muscat-like fragrance. For example, varieties of Muscat of Alexandria, Neo-muscat or the like are given as such a variety The harvesting season of grapes is not particularly restricted. It is possible to utilize the fruit part of grape harvested in a normal season for manufacturing fruit liquor, for example, in a season when the fruit part has a sufficient sugar content and sufficient fragrance.

The fermenting step of step (d) is performed similarly to the step in manufacturing normal fruit liquor, especially *vinum* (wine). For example, the yeast utilized for the fermentation process can be the yeast utilized for the industrial wine manufacture, such as VIN13, EC1118, BM45, 285, and DV10.

Fruit liquor manufactured by the manufacturing method according to the present invention has the enhanced favorable muscat fragrance. The fruit liquor is an aspect of the present invention.

Furthermore, in the present specification, it is found by the quantitative determination of fragrance component in the fruit liquor manufactured by the above manufacturing method that the total amount of monoterpene alcohol, and further the contents of geraniol and linalool, contribute to the favorable muscat fragrance described above.

Therefore, another aspect of the present invention provides fruit liquor containing monoterpene alcohol whose concentration is 1200 ppb or more. The monoterpene alcohol concentration is a total amount of monoterpene alcohol contained in fruit liquor, and is preferably a total value in which concentrations of geraniol, linalool, α-terpineol, β-citronellol and nerol are summed. It is preferable that the concentration of the monoterpene alcohol is 1600 ppb or more. It is further preferable that the concentration of the monoterpene alcohol is 2000 ppb or more. Although the upper limit of the concentration of the monoterpene alcohol is not particularly defined, it is preferable that the upper limit is 10000 ppb, further preferably 5000 ppb, and furthermore preferably 2300 ppb. In addition, according to a preferable embodiment of the present invention, the fruit liquor contains at least geraniol and linalool as the monoterpene alcohol, the concentration of geraniol is 100 ppb or more and the concentration ratio of geraniol/linalool is 0.2 or more. The concentration of geraniol is preferably 250 ppb or more, further preferably 400 ppb or more, and furthermore preferably 800 ppb or more. Although the upper limit of the concentration of geraniol is not particularly defined, it is preferable that the upper limit is 8100 ppb, further preferably 4000 ppb, furthermore preferably 900 ppb. In addition, it is preferable that the concentration ratio of geraniol/linalool is 0.5 or more, and further preferably 1 or more. Although the upper limit for the concentration ratio of geraniol/linalool is not particularly defined, it is preferable that the upper limit is 14.4, further preferably 8.0, and furthermore preferable 1.3.

The content of monoterpene alcohol (free type) in liquid (content of each monoterpene alcohol or total amount of them) can be measured by a gas chromatography-mass spectrometer (GC/MS). For example, monoterpene alcohol can be extracted for one hour using Twister (Gestel) and then can be quantitatively determined by the GC/MS. As the internal standard material, 4-nonanol can be utilized. The analytical conditions for the GC/MS are shown in the table 1 described below. In addition, the term "ppb" or "ppm" utilized in the present specification means a concentration of weight/volume (w/v).

Fruit liquor having a predetermined concentration of monoterpene alcohol according to the present invention may be manufactured by the manufacturing method according to the present invention, or may be manufactured by adding monoterpene alcohol, especially geraniol and linalool, to fruit liquor so as to adjust their concentrations to be within the ranges described above.

The fruit liquor obtained by the manufacturing method according to the present invention and the fruit liquor having the predetermined concentration of monoterpene alcohol can be utilized for imparting muscat fragrance to a different food or drink. Therefore, another aspect of the present invention provides a flavor-imparting agent for imparting muscat fragrance, comprising the fruit liquor. The flavor-imparting agent according to the present invention can be added to various foods or beverages.

The fruit liquor obtained by the manufacturing method according to the present invention, the fruit liquor having the predetermined concentration of monoterpene alcohol, and the flavor-imparting agent according to the present invention can impart the favorable muscat fragrance to fermented alcoholic beverage when added to the fermented alcoholic beverage. Therefore, another aspect of the present invention provides fermented alcoholic beverage containing the fruit liquor or the flavor-imparting agent.

Furthermore, in the present specification, it is found by the quantitative determination of fragrance component in the fermented alcoholic beverage in which the fruit liquor according to the present invention is added at various concentrations, that the total amount of monoterpene alcohol, and further the contents of geraniol and linalool, contribute to the favorable muscat fragrance described above.

Therefore, another aspect of the present invention provides a fermented alcoholic beverage containing monoterpene alcohol whose concentration is 90 ppb or more. The concentration of monoterpene alcohol is a total amount of monoterpene alcohol contained in the fermented alcoholic beverage, and is preferably a value in which concentrations of geraniol, linalool, α-terpineol, β-citronellol and nerol are summed. Although the upper limit of the concentration of monoterpene alcohol is not particularly defined, it is preferable that the upper limit is 2000 ppb, further preferably 1000 ppb, and furthermore preferably 240 ppb. Furthermore, in a preferable embodiment of the present invention, this fermented alcoholic beverage contains at least geraniol and linalool as monoterpene alcohol, wherein the concentration of geraniol is 10 ppb or more and the concentration of linalool is 50 ppb or more. Although the upper limit of the concentration of geraniol is not particularly defined, it is preferable that the upper limit is 1700 ppb, further preferably 800 ppb, and furthermore preferably 25 ppb. In addition, although the upper limit of the concentration of linalool is not particularly defined, it is preferable that the upper limit is 300 ppb, and further preferably 140 ppb.

Fermented alcoholic beverage having a predetermined concentration of monoterpene alcohol according to the present invention may be manufactured by adding the fruit liquor or the flavor-imparting agent according to the present invention, or may be manufactured by adding monoterpene alcohol, especially geraniol and linalool, to fermented alcoholic beverage so as to adjust their concentrations to be within the ranges described above.

In the present specification, the term "fermented alcoholic beverage" means an alcohol-containing (ethanol-containing) beverage manufactured by the microbial alcoholic fermentation. Various beverages can be given as the fermented alcoholic beverage, such as fermented liquor and distilled liquor utilizing grain as raw materials, fruit liquor, and distilled liquor obtained by the distillation of the fruit liquor. According to a preferable embodiment of the present invention, the fermented alcoholic beverage according to the present invention is fruit liquor, and is further preferably vinum (wine).

### EXAMPLES

### Analysis protocol 1: Quantitative determination of free monoterpene alcohol

Free monoterpene alcohol was extracted using Twister (Gestel's) for one hour, and the quantitative determination was performed by the GC/MS. The analytical conditions of the GC/MS are shown in table 1 described below.

[Table 1]

**Table 1: GC/MS analyzing condition**

| | | |
|---|---|---|
| GC/MS | : Agilent 5975 | |
| Column | : BP-20 (50 m x 0.22 mm x 0.25 µm) | |
| Flow rate | : 1 ml/min constant flow | |
| Split ratio | : 10:1 (TDU splitless, CIS split) | |
| Temperature-rising condition | : 60 °C 3 min hold → (3 °C/min) → 245 °C 10 min hold | |
| Measurement mode | : SIM mode | |
| Selected ion | : linalool | m/z = 71 (Target ion), 93, 121 |
| | α-terpineol | m/z = 93 (Target ion), 121, 136 |
| | β-citronellol | m/z = 69 (Target ion), 81, 95 |
| | nerol | m/z = 69 (Target ion), 93, 121 |
| | geraniol | m/z = 69 (Target ion), 93, 123 |

### Analysis protocol 2: Quantitative determination of bonded monoterpene alcohol

Bonded monoterpene alcohol is glucoside, in which glucose is bonded to monoterpene alcohol, and is non-volatile monoterpene alcohol.

The quantitative determination of bonded monoterpene alcohol was performed in reference to J. Inst. Brew. 116(1), 77-70, 2010. In short, Sep-Pak plus (Waters') was utilized to separate free monoterpene alcohol and bonded monoterpene alcohol, wherein the bonded monoterpene alcohol obtained was converted to free monoterpene alcohol by enzyme AR2000 (DSM'), and the quantitative determination was performed on the free monoterpene alcohol obtained by the GC/MS utilizing the above conditions. A particular procedure is shown by the following (1) to (3).

### (1) Separation of bonded monoterpene alcohol

The separation of bonded monoterpene alcohol was performed using Sep-Pak C18 Plus Cartridge (hereinafter, called as "Sep-Pak"). The treatment of Sep-Pak was performed using Visiprep TM DL type SPE vacuum manifold.
(a) For the pretreatment of Sep-Pak, MeOH of 10 mL was added to the Sep-Pak and then distilled water of 20 mL was added to the Sep-Pak to equilibrate the Sep-Pak.
(b) A sample (fruit juice) was centrifuged at 8,000 rpm for 10 min, and the supernatant of 5 mL was added to the Sep-Pak.
(c) Distilled water of 20 mL was added to the Sep-Pak, and then pentane of 10 mL was added to the Sep-Pak, so as to elute free monoterpene alcohol.
(d) Distilled water of 10 mL was added again to the Sep-Pak, and the Set-Pak was put in a 50 mL tube and centrifuged, in order to remove water as much as possible.
(e) Methanol of 10 mL was added to the Sep-Pak, and a methanol fraction was obtained in which the bonded monoterpene alcohol was eluted.

### (2) Conversion of bonded monoterpene alcohol to free monoterpene alcohol by enzyme reaction

(f) Nitrogen was blown to the methanol fraction obtained by step (e), and the methanol was concentrated to have a volume, several hundreds of µl.
(g) The concentrated methanol solution was filled up to 5.0 mL by 0.1 M citrate buffer (pH 3.5) containing AR2000 of 1.0 g/L.
(h) The solution obtained by the above step (g) was put in an airtight container, and the enzyme reaction was performed on the solution in a thermostat chamber at 40 °C for 13 hours, so as to decompose the bonded monoterpene alcohol to the free monoterpene alcohol.

### (3) Quantitative determination of free monoterpene alcohol in enzyme-reaction solution

(i) As the internal standard material, 4-nonanol of 50 µl having 105 ppm was added to the solution of the above step (h) in which the enzyme reaction was completed.
(j) Dichloromethane of 500 µl was added to the solution of the above step (i), the resultant solution was sufficiently stirred (Vortex for 1 min), and then the dichloromethane fraction was recovered. This process was performed again, and the dichloromethane fraction of about 1 mL was obtained.
(k) Anhydrous sodium sulfate was added to the dichloromethane fraction for the dehydration, and then the resultant fraction was subjected to the GC/MS analysis.
(l) Based on the comparison with the internal standard material, the amount of free monoterpene alcohol in the enzyme-reaction solution was calculated.
(m) The concentration (nM) of terpene precursor in a sample was replaced with the terpene concentration (nM) in enzyme-reaction solution of 5 mL obtained from a sample of 5 mL.

### Analysis protocol 3: Sensory evaluation

The sensory evaluation was performed by twelve of specialized panelists.

### Example 1: Relationship between heating treatment of fruit part and concentration of bonded monoterpene alcohol

A fruit part of grapes was crushed and squeezed by a normal method to obtain grape fruit juice and pericarp. After the grape fruit juice and pericarp obtained were heated at a temperature within a range from room temperature to 95 °C for a period in a range from 0 to 30 minutes, the concentration of bonded monoterpene alcohol was measured. Grape variety of Neo-muscat was utilized as the grapes.

Particularly, the heating treatment was performed as follows. A fruit part of grapes of 150 g was crushed, and fruit juice of 90 mL was obtained by the 60 % (v/w) squeeze. Squeezed juice residue was soaked in the fruit juice using a 200 mL Erlenmeyer flask, and heated in a water bath as for the heating treatment. The extraction at room temperature was utilized for a control plot. The treatment conditions of extraction under heating for experimental plots were 45 °C, 65 °C, 85 °C and 95 °C, and the holding conditions were respectively a reached temperature, 10 minutes holding and 30 minutes holding. The rising of temperature took 15 to 20 minutes. After the heat was removed, samples were kept overnight (16 hours) at room temperature. The samples were squeezed again and fruit juice of 90 mL was obtained. This fruit juice was utilized for each analysis. The results are shown in table 2-1.

[Table 2-1]

**Table 2-1: Comparison of bonded monoterpene alcohol concentrations in heated fruit juice**

| Temperature (°C) | Room temperature | **45 °C** | | | **65 °C** | | | **85 °C** | | | **95 °C** |
|---|---|---|---|---|---|---|---|---|---|---|---|
| Time (min) | 0 min | 0 min | 10 min | 30 min | 0 min | 10 min | 30 min | 0 min | 10 min | 30 min | 0 min |
| linalool (nM) | 3.4 | 4.5 | 4.6 | 3.9 | 7.1 | 7.3 | 7.7 | 7.8 | 7.0 | 7.4 | 6.8 |
| α-terpineol (nM) | 0.6 | 0.8 | 0.9 | 0.7 | 1.3 | 1.4 | 1.4 | 1.4 | 1.4 | 1.6 | 1.3 |
| β-citronellol (nM) | 0.7 | 1.1 | 1.0 | 1.0 | 1.2 | 1.3 | 1.3 | 1.2 | 1.1 | 1.2 | 0.9 |
| nerol (nM) | 3.1 | 4.2 | 5.3 | 4.3 | 7.0 | 7.9 | 7.6 | 7.7 | 6.9 | 8.9 | 7.6 |
| geraniol (nM) | 51.1 | 71.7 | 91.8 | 67.8 | 120.8 | 124.7 | 124.3 | 131.9 | 115.3 | 142.7 | 127.7 |
| Total of bonded monoterpene alcohol (nM) | 58.9 | 82.3 | 103.6 | 77.7 | 137.4 | 142.6 | 142.3 | 150.0 | 131.7 | 161.8 | 144.3 |
| Results of suitability evaluation | × | ○ | ○ | ○ | ○ | ○ | ○ | ○ | ○ | ○ | ○ |

| | | | | | | | | | | | |
|---|---|---|---|---|---|---|---|---|---|---|---|
| Criteria of suitability evaluation: ○: Bonded monoterpene alcohol is sufficiently extracted. ×: Bonded monoterpene alcohol Is not sufficiently extracted. | | | | | | | | | | | |

In addition, instead of Neo-muscat, grapes of Muscat variety of Alexandria were utilized and a similar examination was carried out. The holding time after the heating was 0 min (reached temperature). The results are shown in table 2-2.

[Table 2-2]

**Table 2-2: Comparison of bonded monoterpene alcohol concentrations in heated fruit juice**

| Temperature (°C) | Room temperature | **45°C** | **65 °C** | **85 °C** | **95 °C** |
|---|---|---|---|---|---|
| Time (min) | 0 min | 0 min | 0 min | 0 min | 0 min |
| linalool (nM) | 1.5 | 2.9 | 4.3 | 5.5 | 3.7 |
| α-terpineol (nM) | 0.4 | 0.6 | 0.8 | 1.0 | 0.8 |
| β-citronellol (nM) | 0.3 | 0.4 | 0.4 | 0.4 | 0.6 |
| nerol (nM) | 0.8 | 1.3 | 2.2 | 2.7 | 2.1 |
| geranlol (nM) | 1.0 | 1.8 | 3.4 | 4.1 | 3.3 |
| Total of bonded monoterpene alcohol (nM) | 4.0 | 7.0 | 11.1 | 13.7 | 10.5 |
| Results of suitability evaluation | × | ○ | ○ | ○ | ○ |

| | | | | | |
|---|---|---|---|---|---|
| Criteria of suitability evaluation: ○: Bonded monoterpene alcohol is sufficiently extracted. ×: Bonded monoterpene alcohol is not sufficiently extracted. | | | | | |

As shown clearly in table 2-1 and table 2-2, it was confirmed that bonded monoterpene alcohol was sufficiently extracted from pericarp of grapes at 45 to 95 °C.

### Example 2: Relationship between enzyme treatment of fruit part and concentration of free monoterpene alcohol

A fruit part of grapes were crushed and squeezed by a normal method to obtain grape fruit juice and pericarp. After the grape fruit juice and pericarp obtained were heated at the reached temperature 85 °C, the enzyme (AR2000) having the glycosidase activity was added at a temperature in a range from 10 to 85 °C for performing the enzyme treatment. Each of grape fruit juice after the enzyme treatment was fermented by the yeast (VIN13). Then, the concentration of free monoterpene alcohol in wine after the fermentation was measured. Grape variety of Neo-muscat was utilized as the grape.

The experimental plots were set as shown in table 3 described below, with respect to the presence of pericarp used, the presence of added enzyme, the presence of heating treatment, and the temperature when the enzyme was added. AR2000 (DSM) was utilized as the enzyme. VIN13 was utilized as the yeast.

[Table 3]

**Table3 : Setting of experimental plots and sugar content of fruit juice**

| Experimental plot | Utilization of pericarp | Heat treatment | Addition of enzyme | Temperature of enzyme addition | Yeast | Sugar content of fruit juice |
|---|---|---|---|---|---|---|
| Control | - | - | - | | VIN13 | 21.0 |
| Experiment 1 | ○ | ○ | ○ | 85 °C | VIN13 | 20.9 |
| Experiment 2 | ○ | ○ | ○ | 55 °C | VIN13 | 21.3 |
| Experiment 3 | ○ | ○ | ○ | 10°C, | VIN13 | 21.0 |

| | | | | | | |
|---|---|---|---|---|---|---|
| * The sugar content of fruit juice means a sugar content of the pre-fermented fruit juice in which the heat treatment was performed and the enzyme was added. | | | | | | |

The treatment of the fruit part of grapes was performed particularly as follows. Aqueous sulfurous acid of 770 µl was added to fruit part of grapes of 770 g and squeezing was performed, so as to obtain fruit juice of 500 ml (65 % squeeze). For a plot utilizing pericarp, squeezed juice residue was soaked in the fruit juice, and succeeding processes were performed. For the heating treatment, the fruit juice and the squeezed juice residue were put into a 1 L bottle and heated in a water bath. After the temperature reached 85 °C, the bottle was removed from the water bath and was allowed to cool. For each experimental plot, the amount of added enzyme AR2000 was set to be 25 mg. For the experimental plots 1 to 3, the enzyme was added when the temperature was confirmed to be returned back to a set temperature after the heat treatment was performed. After the heattreatment and the addition of enzyme, the bottle was kept overnight at 5 °C. A plot utilizing pericarp was squeezed again and fruit juice of 500 mL was obtained. All the fruit juices were centrifuged by 5000 rpm at 20 °C for 10 minutes, and the supernatant was utilized for the fermentation.

The fermentation was performed as follows. Thiamine 1 mg/L, ammonium sulfate 275 mg/L, OptiWHITE (Lallemand) 300 mg/L, and Fermaid K 250 mg/L were added to each of the above fruit juices as a nutrient source. Sugar contents were as shown in the table 3. Additional sugar was not supplemented. The yeast was added to be 500 mg/L after the re-hydration.

The concentration of free monoterpene alcohol in the wine of each experimental plot is shown in table 4-1 together with the results of sensory evaluation. [Table 4-1]

**Table 4-1: Comparison of the free monoterpene alcohol concentration and the results of sensory evaluation at each temperature of enzyme treatment**

| Experimental plot | | Experiment 1 | Experiment 2 | Experiment 3 |
|---|---|---|---|---|
| Skin contact | | ○ | ○ | ○ |
| Heat treatment | | ○ | ○ | ○ |
| Enzyme treatment | | ○ | ○ | ○ |
| Temperature of enzyme addition | | 85°C | 55 °C | 10 °C |
| linalool (ppb) | | 494 | 473 | 560 |
| α-terpineol (ppb) | | 93 | 76 | 77 |
| β-citroneliol (ppb) | | 121 | 498 | 488 |
| nerol (ppb) | | 44 | 400 | 430 |
| geraniol (ppb) | | 757 | 6739 | 8072 |
| Total of free monoterpene alcohol (ppb) | | 1509 | 8186 | 9627 |
| Results of sensory evaluation | Muscat smell | ○ | ○ | ○ |
| | Comment | Although muscat smell is sensed, the smell is stuffy due to the influence of heated odor. | The sensed muscat smell is the strongest. | The muscat smell is sensed strongly. |

| | | | | |
|---|---|---|---|---|
| Criteria of evaluation: ○: Muscat-like fragrance is strongly sensed. Δ: Muscat smell is similar to that in a conventional method. ×: Sensed muscat-like fragrance is too weak. | | | | |

In addition, instead of Neo-muscat, grapes of Muscat variety of Alexandria were utilized and a similar examination was carried out. The results are shown in table 4-2.

**Table 4-2: Comparison of the free monoterpene alcohol concentration and the results of sensory evaluation at each temperature of enzyme treatment**

| Experimental plot | | Experiment 4 | Experiment 5 | Experiment 6 |
|---|---|---|---|---|
| Skin contact | | ○ | ○ | ○ |
| Heat treatment | | ○ | ○ | ○ |
| Enzyme treatment | | ○ | ○ | ○ |
| Temperature of enzyme Addition | | 85 °C | 50 °C | 10 °C |
| linalool (ppb) | | 300 | 526 | 458 |
| α-terpineol (ppb) | | 68 | 96 | 91 |
| β-citronellol (ppb) | | 32 | 391 | 553 |
| nerol (ppb) | | 6 | 244 | 231 |
| geraniol (ppb) | | 54 | 1170 | 952 |
| Total of free monoterpene alcohol (ppb) | | 460 | 2427 | 2285 |
| Result of sensory evaluation | Muscat smell | Δ | ○ | ○ |
| | Comment | Although muscat smell is sensed, the smell is stuffy due to the influence of heated odor. | The sensed muscat smell is the strongest. | The muscat smell is sensed. |

| | | | | |
|---|---|---|---|---|
| Criteria of evaluation: ○: Muscat-like fragrance is strongly sensed. Δ: Muscat smell is similar to that In a conventional method. ×: Sensed muscat-like fragrance is too weak. | | | | |

As shown clearly in table 4-1 and table 4-2, the wine, fermented with grape fruit juice in which the enzyme treatment was performed at 10 to 55°C or 10 to 50°C, contained a large amount of free monoterpene alcohol. In contrast to the result of the control plot, wherein no pericarp was used and neither heat treatment nor enzyme treatment was performed (no data shown), the experimental plots wherein pericarp was added to the fruit juice, heat treatment and enzyme treatment in the range of 10 to 55°C or 10 to 50°C were performed showed a dramatic increase in the free monoterpene alcohol.

Also, the results of sensory evaluation showed that the experimental plots had stronger muscat smell than the control plot (no data shown). In addition, a plot having a higher concentration of free monoterpene alcohol was evaluated to have stronger muscat smell.

Then, a reinforcing effect was examined for the muscat-like fragrance, with respect to either or both of the heat treatment and the enzyme treatment. The specific procedure was similar to the procedure described above. The results are shown in table 5 described below.
[Table 5]

**Table 5: Reinforcing effect of heat treatment and enzyme treatment at fruit juice processing step for muscat-like fragrance**

| Experimental plot | | Heat treatment only | Enzyme treatment only | Heat treatment + enzyme treatment |
|---|---|---|---|---|
| Skin contact | | ○ | ○ | ○ |
| Heat treatment | | ○ | - | ○ |
| Enzyme treatment | | - | ○ | ○ |
| Temperature of enzyme Addition | | - | room temperature | 55 °C |
| linalool (ppb) | | 486 | 454 | 473 |
| α-terpineol (ppb) | | 76 | 29 | 76 |
| β-citronellol (ppb) | | 121 | 401 | 498 |
| nerol (ppb) | | 35 | 205 | 400 |
| geraniol (ppb) | | 741 | 3191 | 6739 |
| Total of free monoterpene alcohol (ppb) | | 1459 | 4280 | 8186 |
| Sensory evaluation | Muscat smell | ○ | ○ | ○ |
| | Comment | Although muscat smell is sensed, the smell is stuffy due to the influence of heated odor. | The muscat smell is sensed. | Splendid muscat-like fragrance is sensed strongly. |

| | | | | |
|---|---|---|---|---|
| Criteria of evaluation: ○: Muscat-like fragrance is strongly sensed. Δ: Muscat smell is similar to that in a conventional method. x: Sensed muscat-like fragrance Is too weak. | | | | |

As shown clearly in table 5, sufficient reinforcing effect of muscat-like fragrance was obtained by each of the heat treatment and the enzyme treatment, in proportion to the increasing concentration of free monoterpene alcohol. However, when these treatments were combined, significantly higher concentration of free monoterpene alcohol and significantly stronger reinforcing effect of muscat-like fragrance were obtained. Based on these results, it is considered that the synergetic effect of the heattreatment and the enzyme treatment induces increase in the concentration of free monoterpene alcohol and enhancement of the reinforcing effect of muscat-like fragrance.

### Example 3: Scaled-up test

Wine was manufactured in a 50 kL scale, with a procedure similar to Example 2. In this example, grapes of Muscat variety of Alexandria were utilized.

The concentration of free monoterpene alcohol in the wine obtained (specimen 1) is shown in table 6-1, together with the concentrations of free monoterpene alcohol concentration in wine (specimens 2 and 3) manufactured using grapes of Muscat variety of Alexandria on a laboratory scale and the concentration in a commercial product. At the bottom of table 6-1, composition ratios of geraniol to other monoterpene alcohols are shown.

[Table 6-1]

**Table 6-1: Comparison of free monoterpene alcohol concentrations between specimens and commercial products**

| | | Specimen | | | Commercial products (n = 18) | | | |
|---|---|---|---|---|---|---|---|---|
| | | 1 | 2 | 3 | Average | Standard deviation | Maximum | Minimum |
| Concentration ppb | linalool | 675 | 667 | 704 | 180 | 118 | 244 | 73 |
| | α-terpineol | 332 | 147 | 121 | 531 | 228 | 836 | 118 |
| | β-citronellol | 50 | 171 | 114 | 30 | 29 | 72 | 15 |
| | nerol | 45 | 386 | 383 | 2 | 6 | 0 | 0 |
| | geraniol | 128 | 853 | 402 | 0 | 0 | 0 | 0 |
| | Total of free monoterpene alcohol | **1230** | **2224** | **1724** | 743 | 381 | 1152 | 206 |
| Composition ratio of components | geraniol/linalool | **0.2** | **1.3** | **0.6** | 0.0 | 0.0 | 0.0 | 0.0 |
| | geranlol/α-terpineol | 0.4 | 5.8 | 3.3 | 0.0 | 0.0 | 0.0 | 0.0 |
| | geraniol/β-citronellol | 2.6 | 5.0 | 3.5 | 0.0 | 0.0 | 0.0 | 0.0 |
| | geraniol/nerol | 2.8 | 2.2 | 1.0 | 0.0 | 0.0 | 0.0 | 0.0 |

In addition, a similar examination was performed at different time. The results are shown in table 6-2.

**Table 6-2: Comparison of free monoterpene alcohol concentrations between specimens and commercial products**

| | | Specimen | | | Commercial products (n = 18) | | | |
|---|---|---|---|---|---|---|---|---|
| | | 4 | 5 | 6 | Average | Standard deviation | Maximum | Minimum |
| Concentration ppb | linalool | 999 | 526 | 682 | 180 | 118 | 244 | 73 |
| | α-terpineol | 439 | 96 | 126 | 531 | 228 | 836 | 118 |
| | β-citronellol | 38 | 391 | 235 | 30 | 29 | 72 | 15 |
| | nerol | 120 | 244 | 349 | 2 | 6 | 0 | 0 |
| | geraniol | 278 | 1170 | 1068 | 0 | 0 | 0 | 0 |
| | Total of free monoterpene alcohol | **1874** | **2427** | **2460** | 743 | 381 | 1152 | 206 |
| Composition ratio of components | geranlol/linalool | **0.3** | **2.2** | **1.6** | 0.0 | 0.0 | 0.0 | 0.0 |
| | geraniol/α-terpineol | 0.6 | 12.2 | 8.5 | 0.0 | 0.0 | 0.0 | 0.0 |
| | geraniol/β-citronellol | 7.3 | 3.0 | 4.5 | 0.0 | 0.0 | 0.0 | 0.0 |
| | geraniol/nerol | 2.3 | 4.8 | 3.1 | 0.0 | 0.0 | 0.0 | 0.0 |

As shown clearly in talbe 6-1 and table 6-2, the wine (specimens 1 and 4) manufactured on an increased 50 kL scale had concentrations of free monoterpene alcohol similar to the wine (specimens 2, 3, 5 and 6) manufactured on a laboratory scale. In addition, compared with a commercial product, each of the specimens clearly had a larger total value of concentrations of the free monoterpene alcohol (linalool, α-terpineol, β-citronellol, nerol and geraniol). Based on these comparisons, it was considered that the total value of monoterpene alcohol is preferably 1200 ppb or more, further preferably 1600 ppb or more, and furthermore preferably 2000 ppb or more. In addition, as compared with the commercial product, the specimens were characterized by the concentrations of geraniol and linalool. Thus, in the case of the total value of monoterpene alcohol not less than 1200 ppb, it was considered that the concentration of geraniol is preferably 100 ppb or more, further preferably 250 ppb or more, furthermore preferably 400 ppb or more, and moreover preferably 800 ppb or more, and that the ratio of geraniol/linalool is preferably 0.2 or more, further preferably 0.5 or more, furthermore preferably 1 or more.

Then, in the case that the specimens described above were mixed to a conventional fermented alcoholic beverage so as to make the final product, the amount of added specimens required for obtaining the sufficient reinforcing effect of muscat-like fragrance was examined. Specifically, the specimen 1 described above was mixed to a conventional product (wine) at various ratios. Then, the concentration of free monoterpene alcohol was measured for each sample, and the sensory evaluation was performed. The results are shown in table 7 described below.

[Table 7]

**Table 7: Conforming test of the reinforcing effect for muscat fragrance [evaluation results (n - 5)]**

| | Conventional product (wine) | The proportion of added muscat-fragrance emphasized wine (%) | | | | |
|---|---|---|---|---|---|---|
| | | 5% | 8 % | 11 % | 20% | 30% |
| linalool (ppb) | 25.3 | 33.8 | **54.0** | 74.3 | 135.0 | 202.5 |
| α-terpineol (ppb) | 15.4 | 16.6 | 26.6 | 36.5 | 66.4 | 99.6 |
| β-citronellol (ppb) | 1.0 | 2.5 | 4.0 | 5.5 | 10.0 | 15.0 |
| nerol (ppb) | 2.9 | 2.3 | 3.6 | 5.0 | 9.0 | 13.5 |
| geraniol (ppb) | 8.1 | 6.4 | **10.2** | 14.1 | 25.6 | 38.4 |
| Total of free monoterpene alcohol (ppb) | 52.7 | 61.5 | **98.4** | **135.3** | **246.0** | **369.0** |
| Sensory evaluation | Δ | Δ | ○ | ○ | ○ | ○ |

| | | | | | | |
|---|---|---|---|---|---|---|
| Criteria of evaluation: ○: Muscat-like fragrance is strongly sensed. Δ: Muscat smell is similar to that of a conventional method. ×: Sensed muscat-like fragrance is too weak. | | | | | | |

Based on the results of the sensory evaluation shown in table 7, it was found preferable that the blending ratio of the specimen 1 to the current product is 8 % or more. In other words, it was considered preferable that the total concentration of monoterpene alcohol is 90 ppb or more. In addition, in terms of the concentrations of geraniol and linalool, in the case where the total concentration of monoterpene alcohol was 90 ppb or more, it was considered preferable that the concentration of geraniol is 10 ppb or more, and that the concentration of linalool is 50 ppb or more.

## Claims

1. A fermented alcoholic beverage, comprising monoterpene alcohol whose concentration is 90 ppb or more.

2. The fermented alcoholic beverage according to claim 1, wherein at least geraniol and linalool are contained as the monoterpene alcohol, a concentration of geraniol is 10 ppb or more, and a concentration of linalool is 50 ppb or more.

3. A fruit liquor, comprising monoterpene alcohol whose concentration is 1200 ppb or more.

4. The fruit liquor according to claim 3, wherein at least geraniol and linalool are contained as the monoterpene alcohol, a concentration of geraniol is 100 ppb or more, and a concentration ratio of geraniol/linalool is 0.2 or more.

5. A method for manufacturing a fruit liquor in which muscat fragrance is emphasized, comprising following step (a), step (d), and any one or both of step (b) and step (c):
(a) obtaining fruit juice or fruit juice containing pericarp by crushing and squeezing the fruit part of grapes;
(b) heating the fruit juice or the fruit juice containing the pericarp obtained by step (a), so as to make an article temperature reach 45 to 95 °C;
(c) adding an enzyme having a glycosidase activity to the fruit juice or the fruit juice containing the pericarps obtained by step (a) at 10 to 55 °C of the article temperature of the fruit juice;
(d) fermenting the fruit juice obtained by step (b) or step (c) with a yeast having a β-glucosidase activity.

6. The method according to claim 5, comprising all of step (a), step (b), step (c) and step (d).

7. A fruit liquor, manufactured by the method according to claim 5 or 6.

8. A flavor-imparting agent for imparting muscat fragrance, comprising the fruit liquor according to any one of claims 3, 4 and 7.

9. A fermented alcoholic beverage, comprising the fruit liquor according to any one of claims 3, 4 and 7, or the flavor-imparting agent according to claim 8.
